(19)

Europäisches Patentamt
European Patent Office
Office européen des brevets

(11) **EP 3 889 885 A1**

(12) **EUROPEAN PATENT APPLICATION**

(43) Date of publication:
**06.10.2021 Bulletin 2021/40**

(51) Int Cl.:
***G06T 5/50*** (2006.01)

(21) Application number: **20167474.4**

(22) Date of filing: **01.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **KOEHLER, Thomas**
**5656 AE Eindhoven (NL)**

(74) Representative: **Philips Intellectual Property & Standards**
**High Tech Campus 5**
**5656 AE Eindhoven (NL)**

(54) **BIAS CORRECTION FOR DARK-FIELD IMAGING BASED ON SLIDING WINDOW PHASE RETRIEVAL**

(57) A system (IPS) and related method for dark-field image processing. The system comprises one or more input interfaces (IN) for receiving, at a first resolution, a first dark-field image ($\Delta'$) of an object (OB), and, at a second resolution higher than the first resolution, a second dark-field image ($\Delta$) of the object. A combiner ($\Sigma$) configured to combine first information from the first image and second information from the second image to obtain an enhanced dark-field image $\Delta\dagger$. The system helps reduce statistical bias in dark-field imaging.

FIG. 1

**Description**

FIELD OF THE INVENTION

The invention relates to a system of dark-field image processing, a method of dark-field image processing, an imaging arrangement, a computer readable medium, and a computer program element.

BACKGROUND OF THE INVENTION

Dark-field imaging has attracted much interest especially in the medical field. Dark-field ("DAX")-imaging is a type of X-ray imaging. Contrast in dark-field imaging relates to the amount of small angle scatter experienced by the X-radiation.

Experimental dark-field imaging with mice have been reported by A. Yaroshenko et al in "Pulmonary Emphysema Diagnosis with a Preclinical Small-Animal X-ray Dark-Field Scatter-Contrast Scanner", Radiology, vol. 269, No 2, November 2013.

DAX imaging may be used to detect lung diseases like COPD (Chronic obstructive pulmonary disease), fibrosis etc. In particular for early detection of COPD, quantitative measurements may be desirable.

It has been overserved that at times DAX-images are corrupted by statistical bias.

SUMMARY OF THE INVENTION

There may therefore be a need for improved DAX-imaging.

The object of the present invention is solved by the subject matter of the independent claims where further embodiments are incorporated in the dependent claims. It should be noted that the following described aspect of the invention equally applies to the method of dark-field image processing, to the imaging arrangement, to the computer readable medium, and to the computer program element.

According to a first aspect of the invention there is provided a system for dark-field image processing, comprising:

- one or more input interfaces for receiving, at a first resolution, a first dark-field image of an object, and, at a second resolution higher than the first resolution, a second dark-field image of the object; and
- a combiner configured to combine first information from the first image and second information from the second image to obtain an enhanced dark-field image.

In embodiments, the first information is at a first spatial frequency range and the second information is at a second spatial frequency range, wherein the first spatial frequency is lower than the second spatial frequency.

In embodiments the system includes a dark-field image generator configured to generate, based on projection data including measurements acquired by an X-ray imaging apparatus of the object, the first dark-field image by computing, for a given target image location, an image value based on measurements for the said target image location and on one or more measurements for one or more other image locations in a neighborhood of the said target image location.

In an alternative embodiment the system further includes a low-pass filter to low-pass filter the projection data before generation the first dark-field image by the dark-field image generator.

In embodiments, the dark-field image generator implements a phase retrieval algorithm.

In embodiments, the phase retrieval algorithm is based on a signal model that includes a fitting variable for a dark-field signal.

In embodiments, the imaging apparatus includes an imaging facilitator structure that is configured to modulate X-ray radiation into a fringe pattern.

In embodiments, the imaging facilitator structure includes one or more gratings.

In embodiments the imaging apparatus is of the scanning type, such as a slot-scanning system.

In another aspect there is provided a dark-field image processing method, comprising the steps of:

- receiving, at a first resolution, a first dark-field image of an object, and, at a second resolution higher than the first resolution, a second dark-field image of the object; and
- combining first information from the first image and second information from the second image to obtain an enhanced dark-field image.

In another aspect there is provided a computer program element, which, when being executed by at least one processing unit, is adapted to cause the processing unit to perform at least one of the steps of the method.

In another aspect there is provided a computer readable medium having stored thereon the program element.

A particular problem which the proposed system helps to address is that in DAX imaging the estimation of the dark-field signal is in general a non-linear process and thus, the estimated value suffers from a systematic error (referred to herein "(statistical) bias"). Bias is particularly prominent when the estimation is based on detector measurements that include a relatively high noise level. Such noisy measurements can be expected in thorax imaging, for instance at the caudal end of the lung, where it overlaps with the abdomen.

Whilst in other fields bias may be handled by low-pass filtering the measurement data, such an approach is not generally preferred in scanning imaging systems, such as slot-scanning (DAX) imaging systems, since such imaging systems rely on relatively high-frequency fringe patterns. Thus, low-pass filtering of the measurement data in the projection domain will imply a loss of fringe visibility which ultimately degrades the signal to noise ratio. An additional problem with low pass filtering in combination with slot-scanning is that it effectively reduces the frame width, resulting in an additional signal-to-noise-ratio (SNR) degradation. Finally, "plain" low pass filtering degrades the spatial resolution of the final image and fine details will be lost.

Other bias-correction schemes that work on a per-pixel basis tend to increase noise.

The proposed method and system allow to reduce bias whilst maintaining the SNR.

By combining measurements from other image locations when computing the lower resolution dark-field signal/value for a given image location is akin to a smoothing operation. Whilst the use of the low-resolution input image helps reduce bias, the loss in spatial resolution may be undesirable. To address resolution loss, the proposed approach includes the step to at least approximately restoring the resolution by using a spatial frequency analysis and by combining high frequency and low frequency image information from the two input images, the low and the high-resolution image, to arrive at the enhanced image. In particular, the low frequency image information is taken from the low-resolution image as it is in particular low frequency, that is, large scale structures where bias is more prominent.

In the spatial frequency analysis, the proposed system identifies the two frequency ranges. The frequency ranges may be identified in frequency domain. System may perform an inverse Fourier transformation or similar operation to reverse-transform from frequency domain into image domain to arrive at the enhanced dark-field image by combination.

"Frequencies" as referred to herein relate to spatial frequencies in an image.

By "phase retrieval (algorithm)" is meant any algorithm based on signal models or otherwise that compute phase signal in combination with a dark-field signal from measured intensities. Because of the mutual interplay between frequency shift and the dark-field signal which results from small angle scattering, in phase retrieval algorithms both signals, dark-field and phase, are usually computed jointly. Although "phase retrieval" is an established name, it may also be referred to herein as a "dark-field signal retrieval". The phase retrieval operation may be facilitated by an imaging facilitator structure such as gratings, structured mask, coded aperture plate, a crystal etc, or other at least partially radiation blocking structures with periodic or non-periodic sub-structures, that interact with the imaging X-ray beam to realize different measurements to so impose more constraints. This helps resolve ambiguities, or ill-posedness, otherwise inherent in phase retrieval.

By "image location" is either meant a native pixel position on a detector or a location for a geometrical ray (extending from the X-ray source) that defines a location in image domain where the dark-field image is to be generated or "reconstructed". Image domain is a section of space, usually a surface, such as a plane. The image domain comprises image locations, to which image values of the image to be reconstructed are assigned.

"Image generation (algorithm)" includes in particular phase retrieval algorithms or other image generation schemes that are configured to extract or isolate dark-field imagery and/or phase contrast imagery from a series of projection images. The acquisition of the series of projection images (also referred to herein as "phase-stepping") may have been facilitated by inclusion of the imaging facilitator structure into the X-ray imaging apparatus. The image generation algorithm may include optimizing a fit of the measured data (the projection images) to a signal model. The optimization is to improve a cost function that measures the mis-fit between values as per the signal model and the measured data.

The imaged "object" is animate and includes a human or animal or a part thereof, or the object is inanimate such as an item of luggage in a security screening system or a sample object in non-destructive material testing.

"User" includes a person (e.g., a healthcare professional) who operates the imaging apparatus and/or system to image the object.

BRIEF DESCRIPTION OF THE DRAWINGS

Exemplary embodiments of the invention will now be described with reference to the following drawings, which, unless stated otherwise, are not to scale, wherein:

Fig. 1 is a schematic block diagram of an X-ray imaging apparatus configured for phase-contrast and/or dark-field imaging;
Fig. 2 is a schematic block diagram of a bias correction system for dark-field imaging; and

Fig. 3 is a flow chart of a method for bias correction in dark-field imaging.

DETAILED DESCRIPTION OF EMBODIMENTS

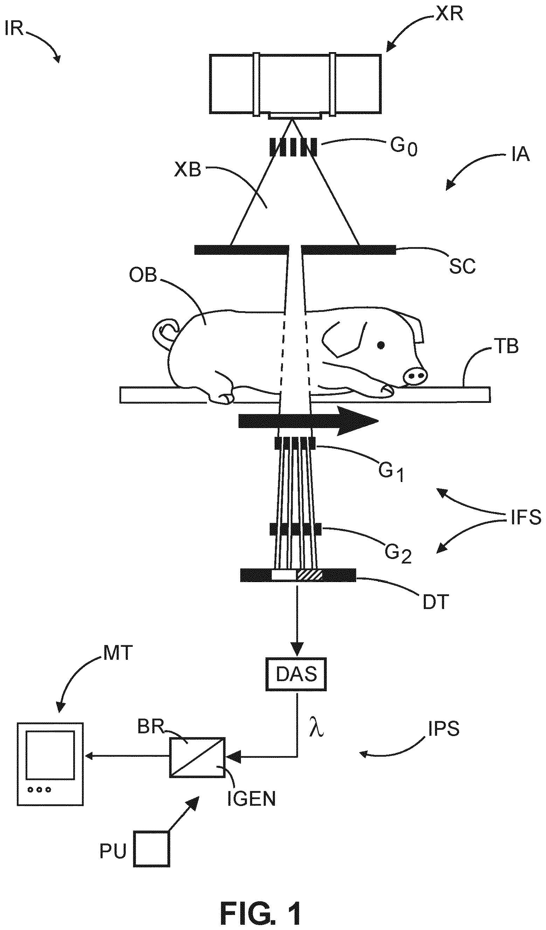

With reference to Fig. 1, there is shown a schematic block diagram of an imaging arrangement IR that includes a computerized image processing system IPS and an X-ray imaging apparatus IA ("imager"). The X-ray imaging apparatus is configured for dark-field X-ray ("DAX"-) imaging and/or phase-contrast ("Φ"-) imaging.

The image processing system IPS may run one or more software modules or routines on one or more processing units PU such as one or more computers, servers, etc. The IPS may be arranged externally and remote of the imager IA or the image processing system IPS is integrated into or associated with the imager IA, for instance into one or more processing units PU of the imager IA, such as a workstation. The image processing system IPS may be implemented in a distributed architecture to serve a group of imagers over a suitably communication network. Some or all components of the image processing section IPS may be arranged in hardware such as a suitably programmed FPGA (field-programmable-gate-array) or as hardwired integrated circuit (IC) chip.

Broadly, the image processing system IPS includes an image generator IGEN that processes projection imagery $\lambda$ acquired by the imager IA into dark-field and/or phase-contrast imagery. The projection imagers $\lambda$ are sometimes referred to herein as "frames". The image generator IGEN of the image processing system IPS includes at least in parts and/or is coupled to a bias correction/reduction facility or (sub-)system BR. Bias-corrected imagery as provided by the image generator IGEN in cooperation with the bias reduction facility BR can then be displayed on a display unit MT or can be stored in a memory DB for later review or use, or it can be otherwise further processed.

Although in Fig. 1 it is envisaged that the imaging apparatus IA supplies the projection imagery $\lambda$ directly, via wireless or a wired connection, to the image processing system IPS, this may not be so in all embodiments. For instance, the projection imagery $\lambda$ may be first stored in a memory such as in a picture archiving system (PACS) of a hospital information system (HIS) or otherwise, and the imagery to be processed is retrieved at a later stage (e.g. upon user request) by the IPS and is then processed.

In general, the imaging apparatus IA includes an X-ray source XR, an X-radiation sensitive detector DT, and an imaging facilitator structure IFS, such as an interferometer, arranged in between the source XR and the detector DT. The X-ray source XR generates an X-ray beam XB which is detectable by the detector DT. The imaging facilitator structure IFS is a device, or a group of devices, that allows translating X-ray beam XB refraction and/or small angle scattering of the beam XB into intensity modulations at the detector DT, thereby facilitating resolving said modulations into dark-field and/or phase-contrast image signals and, if desired, into an attenuation image signal.

In the following, main reference will be made to an interferometric imaging apparatus IA including the interferometer as the imaging facilitator structure IFS, although this is not to exclude embodiments that use other, in particular non-interferometric, imaging facilitator structures IFS. Such non-interferometric imaging facilitator structures IFS include for example coded aperture systems. In general, the dark-field or phase-contrast is obtainable by the imaging facilitator structure IFS imparting a periodic wave front modulation on the incoming imaging X-ray beam and a measurement, by the X-ray detector DT, of a variation of the resulting wave-front caused be the object OB to be imaged.

Turning now in more detail to the imaging apparatus IA, this can be a configured for 2D imaging such as a radiography apparatus or for 3D imaging such as a CT scanner. Between the X-ray source XR and the detector DT there is defined an imaging region where the object OB (e.g., the chest of the subject) to be imaged resides during imaging. In the imaging region there is arranged an interferometer as one embodiment of the imaging facilitator structure IFS. The interferometer includes a single, two or three (or more) grating structures. As said above, the interferometer is but one embodiment of the image facilitator structure IFS and we will make main reference to this embodiment in the following, with the understanding that the principles of the present disclosure are not confined to interferometry but can be readily extended to other grating-based or non-grating based structures as other embodiments of the image facilitator structure IFS as mentioned above.

With continued reference to the (non-limiting) interferometric embodiment of the image facilitator structure IFS, periodicity, aspect ratio, etc. of the gratings are such that they cause diffraction of the X-ray beam and/or just enough coherence is achieved so that the small-angle scattering can be detected or derived. Absorption and phase gratings may be used. In one embodiment the gratings are formed by photolithography or cutting in silicon wafers to define a periodic pattern of trenches. Interspaces between the trenches may be filled with lead or gold for the absorption gratings. Instead of such gratings, crystal structures may be used.

In yet more detail and in one embodiment, an absorbing grating structure G2 is arranged between the detector DT and the object OB whilst the other grating G1, a phase grating, is arranged between the object OB and the X-ray detector DT. In some embodiments there is also an additional grating G0 arranged at the X-ray source XR, in case the X-ray source is incapable of generating natively sufficiently coherent radiation. If the X-ray source produces incoherent radiation (which is usually the case), the (absorption) grating G0 at the X-ray source (also referred to as the source grating) transforms the X-radiation coming out of the X-ray source into an, at least partly, coherent radiation beam XB.

Inverse geometries where G1 is placed upstream the object OB, i.e. between XR and OB, are also envisaged.

The at least partly coherent radiation beam XB propagates through the imaging region and interacts with the interferometer IFS and the patient OB. After said interaction, the radiation is then detected in form of electrical signals at radiation sensitive pixel elements of the detector D. Data acquisition circuitry DAS digitalizes the electrical signals into projection (raw) image data λ which is then processed by the IPS in a manner explained in more detail below.

The imaging apparatus IA may be of the full field-of-view (FoV) type, where the detector is of the flat panel type. In full FoV imaging system, the size of the detector DT and the size of the IFS corresponds to the desired FoV. Alternatively, the detector D and the imaging facilitator structure IFS may be smaller than the intended FoV such as in slot-scanning systems as shown in Fig 1. In some of these systems, the detector comprises a discrete series of detector lines. The detector lines are mounted on a scan arm to be scanned across the intended FoV in different slot-positions.

Slot-scanning systems as shown in Fig. 1 are more cost effective than full FoV system because they require smaller detectors and smaller gratings IFS. The gratings IFS are mounted on the scan arm above the detector and are equally scanned across the FoV. In alternative slot-scanning systems, although the detector DT has the same size as the desired FoV, the gratings are smaller, and a collimation SC is used to scan only parts of the FoV (in "slots") at any one time as per the collimation. In a full FoV system and slot scanning systems with a non-moving flat panel detector, there is a simple one-to-one relationship between pixel position and imaginary geometrical rays that pass through the imaging region to define the imaging geometry. The rays extend from a focal spot of the X-ray source XR and intersect the detector plane at the respective pixel positions. Each one of the geometrical rays corresponds to a respective, different, single one of the pixels. No such simple relationship exists in some slot-scanning system with smaller detector, where each geometrical ray is seen by many different pixels in different "slots" during the scanning. Signals from different pixels are then processed together by a suitable logic for any single geometrical ray.

The image generator IGEN outputs the dark-field signals and/or the phase-contrast signals as respective arrays of image values which form the dark-field image and the phase-contrast image, respectively. These image values or pixel values represent respectively the contrast for the dark-field signal and the phase-change experienced by the X-radiation while traveling through the object OB, for the respective geometrical ray.

Generally, when X-radiation interacts with material, it experiences both attenuation and refraction and hence phase change. The attenuation on the other hand can be broken down into attenuation that stems from photo-electric absorption and attenuation that comes from scatter. The scatter contribution in turn can be decomposed into Compton scattering and Rayleigh scattering. For present purposes of dark-field imaging it is the small angle scattering that is of interest, where "small angle" means that the scatter angle is so small that the scattered photon still reaches the same pixel as it would have reached without being scattered.

The dark-field contribution can be modelled as visibility $V = V_0 * e^{-\int \varepsilon(z)dz}$, with $\varepsilon$ is the spatial distribution of the diffusion property of the patient OB and the integration is performed along the x-ray beam path, and $V_0$ being the reference visibility without object interaction (recorded in a calibration measurement). The dark-field signal as recorded in the dark-field image is then $\Delta = V/V_0$.

Traditional radiography systems are usually incapable of resolving the detected signal into dark-field contribution. However, by using the interferometer IFS as shown in Fig. 1, or by using other imaging facilitator structures IFSs, it is possible to translate these contributions into an intensity pattern of fringes which can be analyzed by the image generator IGEN to obtain the phase-contrast and/or DAX image.

Turning now in more detail to the image generator IGEN, this operates on a series of projection images obtained in a phase stepping operation. Based on this recorded series of projection images, the image generator IGEN computationally resolves the detected fringe pattern in the series projection data into three contributions or signal component, namely the refraction contribution (also referred to as the phase-contrast signal), a dark-field signal component and a remaining attenuation component.

Because of these three contrast mechanisms acting together, the signal processing by the IGEN of the detected series of intensities proceeds in three signal channels (phase-contrast, dark-field, and attenuation).

In the above described types of imaging system, the capability for dark-field/phase-contrast imaging is achieved as follows: the projection data is acquired at the detector DT during the phase stepping operation as a series for a given fixed projection direction. The phase of the fringes is typically stepped over 360°. The phase stepping operation is typically realized by inducing a motion between X-ray beam and of the image facilitator structure IFS, or a component thereof. For instance, in one embodiment the analyzer grating G2 (that is, the grating arranged between object and detector) is moved ("scanned") laterally relative to an optical axis of the X-ray beam. Alternatively, phase stepping can also be achieved by moving the patient OB as in Fig. 1, or by moving the X-ray source, or by moving another grating, etc. This phase stepping motion causes a change of the fringe pattern which in turn can be recorded in the corresponding series for each step of the motion. This series of measurements $M_j$ form, for each geometrical ray, an associated phase curve. The phase curves are in general of sinusoidal shape and it has been found that each encodes the quantities of interest, in particular the dark-field signal, along with attenuation and phase change.

In more detail, the phase curves for each pixel/geometrical ray can be respectively analyzed, for instance by fitting to a sinusoidal signal model as described in Pfeiffer et al Hard-X-ray dark-field imaging using a grating interferometer", published in Nature Materials 7, pp 134-137 (2008), to effect the image generation. Preferably, there are at least three fitting parameters included in the three-channel sinusoidal model. The three fitting parameters represent, respectively, the three contributions phase-contrast, dark-field signal and attenuation. The sinusoidal model is fitted by image generator IGEN to the phase curves to so compute in particular the DAX- and/or $\Phi$-image, and an attenuation (also called "transmission") image, although this is of lesser interest herein. Computation of the apparently superfluous transmission image may be required to correctly account for the three contrast effects as otherwise incorrect contributions are incurred in the DAX and/or $\Phi$-channel.

An optimization procedure is used to fit the measured series of projections to the model. The procedure can be understood in terms of as cost function and the fitting operation can be formulated as an optimization problem. Any suitable optimization scheme such as gradient descent, conjugate gradients, Newton-Raphson, stochastic gradients, Maximum Likelihood approach, other statistical techniques or others are also envisaged. Non analytical methods such as neural networks or other Machine Learning techniques may also be used.

In general, an optimization problem for a signal model $SM$ has the following structure per image location (pixel or geometrical ray) $j$ of the DAX image to be generated:

$$\text{argmin}_{T, \Delta, \varphi} F = \| \lambda - SM^{T,\Delta,\varphi}(X) \| \qquad (1)$$

wherein $SM^{T,\Delta,\varphi}(.)$ is an at least three-channel modulator function that describes how the three contrast mechanism combine to modulate and transform the incoming (undisturbed) radiation X into the measured data $\lambda$, and $\| . \|$ is a suitable similarity measure, a $p$-norm for instance, (squared) Euclidean distance, etc. Function $F$, the objective function (in this case a cost function) measures how well the signal model $SM$ "explains" (or "fits") the measured data $\pi$ and the optimization task is how best to choose the parameters $(T, \Delta, \phi)$ of the model, with the similarity measure $\| . \|$ quantifying the goodness of fit, in case the cost or error. The task in the optimization is to improve the cost function by adjusting parameters $(T, \Delta, \phi)$. In this case, the parameters are to be adjusted in the optimization so that the values ("cost") returned by the cost function $F$ decreases. More than three channels may be used in signal model $SM$, depending on the number of contrast mechanism one wishes to account for. In (1), $F$ may be a function of residues (terms). Each residue quantifies a respective deviation, or cost, of given projection image from its prediction under model $SM$. More specially, in one embodiment, as a special case of (1), the following analytical signal model optimization $F^2$ is used per image location $j$ (pixel or geometrical ray):

$$F^2(T_j, \Delta_j, \phi_j) = \sum_i w_{i,j}\big(M_{i,j} - S_{ij}I_{ij} - T_jI_{i,j}(1 + V_{i,j}\Delta_j \cos(\phi_j - \alpha_{i,j}))\big)^2 \qquad (2)$$

wherein $M_i$, are the measured data (taken from $\lambda$), the undisturbed radiation "X" is represented by $I_j$, $V_j$, and $\alpha_j$ the blank scan intensities, visibilities, and phases, respectively. $T_j$, $\Delta_j$, and $\phi_j$ are the three contrast modulators of $SM()$ mentioned above namely: transmission, dark-field, and differential phase for this image point $j$. $w_{i,j}$ are optional statistical weights, usually selected to be equal or proportional to the inverse variance of the measured data $M_{i,j}$, In embodiments, $w_{i,j} = 1/M_{i,j}$. The index $i$ indicates the phase steps. Following on from (1), the task in (2) is to minimize the cost $F^2$ over the measured data M to find in particular the images $\Delta$ and, optionally, $\phi$. The right hand side of (2) may be understood as a sum of the residues. In (2), the term $S_{i,j}$ is an additional (non-small angle) scatter estimate, but this is optional and the term $S_{ij}I_{ij}$ may be removed from (2).

The above described types of image generation algorithms (1),(2) are sometimes referred to as "phase retrieval" but this is for present purposes a misnomer as there is also the dark-field image co-generated in the fitting operation and so is in fact the transmission image as mentioned above. Other, Fourier based methods, such the one by *Pfeiffer et al* (cited above), and related ones, are also envisaged herein as phase retrieval algorithms in embodiments.

The phase retrieval operation in equations (1),(2) for computing in particular the dark-field image suffers from statistical bias. In more detail, the operations as expressed in (1),(2) may be understood as statistical estimators that act on the measurement data as acquired during the phase stepping. The measurements themselves are composed of a true signal that is superimposed with noise. The measurements thus constitute realization of a random variable, based on which the estimation operation (1),(2) aims to produce an estimate of the true dark-field signal.

Some phase retrieval algorithms, as per (2), or related ones, fall broadly into the category of least square methods. If the noise is Gaussian, least square methods in turn are related to the maximum likelihood approach, a statistical estimation principle. Because of the non-linear processing involved in computing the dark-field signal, the estimator (2) suffers from statistical bias. In other words, in the dark-field signal estimates, a systematic error is incurred. In more detail, the expectation value of the estimator (2) does not in general equal to the true dark-field signal.

The proposed bias correction system BR aims at reducing or, entirely eliminating, the bias for the dark-field

signal $\Delta$ in maximum likelihood-based estimators such as (2), or related ones. As discussed above, whilst previously low-pass filtering or pixel-based processing may be used to reduce bias, this low-pass filtering approach suffers from decreased spatial resolution. With the proposed bias correction method and system BR, the spatial resolution can be essentially preserved, with statistical bias reduced or removed.

Broadly, the bias correction system BR as proposed herein is based on a two-channel input, where two types of dark-field images are generated by different version of maximum-likelihood-based phase retrieval algorithms and are then processed. One of the two versions of dark-field image, referred to herein as the higher resolution dark field image $\Delta$, is generated as explained above by a maximum-likelihood-based phase retrieval algorithm such as (1), (2). In addition, a second version of the dark-field image $\Delta'$, referred to herein as the lower resolution dark-field image, is generated by using a modification of the phase retrieval algorithm at equation (1) or (2). In more detail, this modified phase retrieval algorithm is a windowed version of (1),(2). In other words, for some or each image location for which a dark-field signal is to be generated, the phase retrieval algorithm combines measurements from one or more other image locations.

These other one or more image locations may form a window, neighborhood $\mathcal{N}$, of the considered (target) image location. Any size or shape such as square, circle, etc of such neighborhoods $\mathcal{N}$ is envisaged. For instance, the neighborhood may include one or more of the immediate eight neighbors of each image location. Larger or smaller neighborhoods are also envisaged.

Conceptually, the neighborhood $\mathcal{N}$, also referred to herein as a "window", around a given image location determines the manner in which the phase retrieval algorithm is to be applied, in particular, what measurements data are to be included for the computation of the dark-field signal for the said given image location. In other words, the second low resolution dark-field image $\Delta'$ is derived from a sliding-window phase retrieval algorithm. The window is scanned or "slid" over the image locations to thereby combine measurements from, respectively different, neighboring image locations.

In more detail, the windowed phase retrieval for computing at a given target location $j$ for the lower resolution imagery $\Delta'$ may be formalized as:

$$\mathrm{argmin}_{T,\Delta',\varphi} F = || \, \lambda - SM^{T,\Delta',\varphi}(X) \, ||_{\mathcal{N}_j} \qquad (3)$$

wherein the optimization "argmin", the phase retrieval, is evaluated and processed for measurements $i$ in a neighborhood $\mathcal{N}_j$ (the "window") around the target image location $j$, in distinction to (1) where only measurements $M_{i,j}$ collected for the target image location $j$ are used.

More particularly, and in correspondence to the phase retrieval algorithm in (2), the sliding-window-version may be written as:

$$F^2(T_j', \Delta_j', \Phi_j') = \sum_{j' \in \mathcal{N}_j} \sum_{i \in M_{j'}} w_{i,j} \left( M_{ij'} - S_{ij} I_{ij} - T_j' I_{ij'} (1 + \Delta_j' V_{ij'} \cos \left( \phi_j' - \alpha_{ij'} \right)) \right)^2 \qquad (4)$$

again, in distinction to (2), in the fitting the cost function $F$, some or all measurements for other pixels $j' \in \mathcal{N}_j$ from a neighborhood of the target pixel $j$ are co-processed. Note that in this windowed approach, the reference values $I_{ij'}$, $V_{ij'}$, $S_{ij'}$ (if any) and $\varphi_{ij'}$ are taken for the neighboring pixels $j'$. Again, the additional (non-small angle) scatter $S_{ij'}$ estimate term is optional and the term $S_{ij} I_{ij}$ may be left out in (4). As above in (2), in embodiments, $w_{i,j} = 1/M_{i,j'}$. As in (2), the weights $w$ are optional.

The windowed phase retrieval operation (3)(4) reduce or remove bias since the inclusion of more data reduces virtually the input noise similar to a low-pass filtering of the input data. In addition, in the windowed phase retrieval operation (3)(4) no (or only negligible) SNR loss due to smoothing across fringes is observed. Such SNR loss may otherwise be the case when low-pass filtering were to be done in the projection domain, in particular in X-ray slot-scanning systems.

It will be understood that the proposed windowed phase retrieval algorithm is not necessarily tied to specific signal models $SM$ as used in (2), (4). Phase retrieval algorithms based on any other suitable signal model are also envisaged herein that lead to estimators with inherent bias. This includes in particular phase retrieval algorithms where $||.||$ is based on least-squares principles, or, more generally, maximum-likelihood principles, or statistical principals related thereto.

The windowed phase retrieval operations (3),(4) reduce resolution as compared to the high resolution image $\Delta$ where the computation of the respective dark-field value for a given target image location is confined to measurements collected only for this target image location. This loss of resolution, however, is not the result of leaving out image information but is a result of the smoothing operation (3),(4) where measurements from different image locations from around the target image location are combined.

The loss of spatial resolution may be undesirable, in particular in slot-scanning DAX imaging systems or others, where a loss in resolution is already incurred because the detector DT is read out in binned mode to save time. In order to restore resolution, it is proposed herein to perform a spatial frequency mix or synthesis based on the low resolution image $\Delta'$ and the high resolution image $\Delta$. The enhanced image $\Delta\dagger$ is formed by combining the frequency information from the two images $\Delta$, $\Delta'$. The enhanced image is bias-reduced without (or with only negligible) spatial resolution degradation.

Specifically, the spatial frequency mix is performed to isolate and extract take low-frequency information from the bias-free, or at least bias-reduced, low resolution image $\Delta'$ obtained in the sliding window phase retrieval (3),(4), whereas high-frequency information is isolated and extracted from the bias-corrupted high resolution image $\Delta$ obtained in the conventional phase retrieval (1),(2) without smoothing. A basic reasoning behind using this frequency analysis is that bias occurs typically on a larger length scale, for instance in structures that represent the abdomen, heart, or shoulder of the imaged patient OB. In other words, bias is more pronounced in lower frequency structures, so this information is then taken from bias-reduced image $\Delta'$.

For the spatial frequency mix, any spatial frequency analysis algorithm or filtering technique may be used to analyze the imagery $\Delta$, $\Delta'$ into their spatial frequency components, such as other Fourier-based based, in particular fast Fourier methods (FFT), Wavelet techniques, or other.

In more detail, a spatial frequency analysis is performed on the two images $\Delta$, $\Delta'$ to identify the spatial dark-field content. A cut-off frequency may be used define low frequency range in $\Delta'$, and a high frequency range in the higher resolution image $\Delta$. The ranges are preferably non-overlapping so that each frequency in the lower range is lower than each frequency in the upper range. However, in embodiments a certain overlap may be allowed.

In general, spectral analytic methods will transform the low and high resolution imagery $\Delta$,$\Delta'$ into frequency domain, perform the definition of high and low frequency ranges in the frequency domain, will then combine the two frequency ranges, high and low, collected from the respective images $\Delta$, $\Delta'$ and will then inverse-transform the frequency content back into image domain, to so arrive at the enhanced image $\Delta^\dagger$.

In embodiments, a frequency splitting approach similar to the one discussed by Schechter et al ("The frequency split method for helical cone-beam reconstruction", Med. Phys. 31 (8), August 2004, is used for the above mentioned spatial frequency analysis.

In a more general variant to the above described approach, both the high resolution and low-resolution image $\Delta$, $\Delta'$ are obtained by a windowed application of the phase retrieval algorithm. However, the sizes of the windows in which the measurements are collected for the respective image location differ. That is, in the phase retrieval to obtain the low-resolution image a larger window is used than in the phase retrieval to obtain the high(er)resolution image.

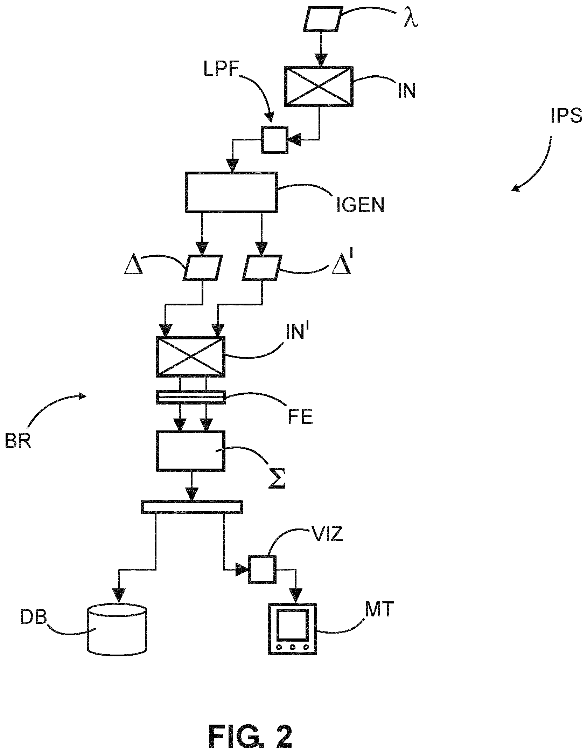

Referring now in more detail to Fig. 2, this shows a block diagram of the proposed image processing system including the bias correction facility BR. The projection measurement data $\lambda$ collected in the phase stepping measurements are received at input port IN. As part of the bias reduction facility BR, the image generator IGEN implements the two phase retrieval algorithms, for instance as per (2),(4) and (1), (3), to compute the above described low and high resolution images $\Delta$, $\Delta'$. In a second processing stage, the two dark-field images $\Delta$, $\Delta'$ at different resolutions are then received through one or more input ports IN' at a frequency extractor component FE. The frequency extractor FE component identifies low spatial frequency content in the low-resolution image $\Delta'$ and identifies high spatial frequency content in the higher resolution image $\Delta$.

The frequency components so identified are then combined at a combiner $\Sigma$ signal to obtain the enhanced, biased corrected, image $\Delta^\dagger$. The combination operation by signal combiner $\Sigma$ may include Fourier transformations. In particular, the frequency extractor FE may transform the input imagery $\Delta$, $\Delta'$ into frequency domain where the frequency ranges, high and low, are identified. The inverse Fourier operation then reverse-transforms the identified frequency ranges from the frequency domain into image domain, and the reverse transformed imaged are then combined, e.g. by pixel-wise addition, to arrive at the enhanced image $\Delta^\dagger$.

Alternatively, the frequency extractor FE does a "quasi"-low-pass filtering (e.g. by using a windowed moving average operation) on the low-frequency image $\Delta'$ and creates a complementary high-pass filtered version of $\Delta$ by subtracting a low-pass filtered version of $\Delta$ from $\Delta$, where the same low-pass filter as on $\Delta'$ is used.

A visualizer VIZ operates to effect displaying of the enhanced dark-field image $\Delta^\dagger$ on a display device MT. Alternatively or in addition to displaying, the enhanced imagery $\Delta^\dagger$ may be stored in a data base DB for later processing or may be processed otherwise.

Optionally, the system in Fig. 2 may still include a low-pass filter LPF to low-pass filter the projection data before processing by the image generator IGEN to produce the low and high resolution imagery. The low-pass filter stage LPF is preferably not used however in slot-scanning imaging systems, but may be used in other types of imaging systems. In other words, in non-slot scanning systems, or in other systems without binned read-out mode or without resolution compromising operations, the low pass filtering may be performed in projection domain, whereas in slot-scanning systems, or system with binned read-out or with other resolution compromising operations, the quasi-low-pass filtering may be effected in the image domain by using the sliding window phase retrieval (3),(4) described above.

Whilst in most cases the image processing system IPS will include both, the image generator IEGN and the bias correction facility BR, this is not a necessity in all embodiments. The image generation as per (1),(2) and in windowed fashion (3),(4) may be done by one or more other processing entities and the imagery $\Delta$, $\Delta'$ is then supplied to the bias corrector. Furthermore, the phase retrieval algorithms in the per location version (1),(2) and the windowed version (3),(4) may be performed by the same image generator or by two separate processing entities, one configured to implement (1),(2), the other configured to implement (3),(4). The latter option allows executing the two versions of the phase retrieval (1),(2) and (3),(4) concurrently rather than in sequence.

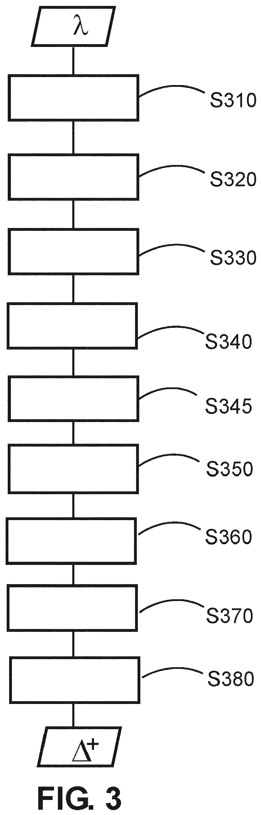

Reference now is made to Fig. 3 which shows a flow chart for an image processing method for reducing bias in dark field imaging. The method illustrates how the above described bias correction system BR may be implemented. However, it will be understood however that the method steps described in the following constitute a teaching in their own right and are not necessarily tied to the specific architecture shown in Figs. 1, 2.

At step S310 measurements $M_j$ in the form of projection imagery $\lambda$ collected by an imaging apparatus configured for dark-field imaging are received. The projection data $M_j$ may be acquired in a phase stepping operation so includes, for each image location to be generated, a series of intensity measurements as explained above.

Optionally, the method may include a low-pass filtering step S320 to low pass-filer the projection data. This step is preferably not used in slot-scan systems as in Fig 1 or related systems, but may be used in other DAX-imaging apparatuses that do not use slot-scanning or are not using binned detector read-out or other resolution comprising operations.

At step S330 a first version $\Delta'$ of a dark field image at a first resolution is computed based on a phase retrieval algorithm.

At step S340 another version $\Delta$ of the dark field image is generated at a second resolution which is higher than the resolution of the first version as generated at step S330. The order of the steps S330,3240 is immaterial.

The different resolutions in step S330 and S340 may be achieved by applying, as explained above, a windowed phase retrieval algorithm using windows of different sizes. In particular, and in one embodiment, the low resolution S330 is achieved by a smoothing operation where measurements $M_{j'}$ from other image location(s) $j'$ are combined or co-processed with measurements $M_j$ for a given target location $j$ when computing the DAX-signal/value for the said target location $j$. in distinction to step S330, the high resolution image in step S340 is generated by computing at a given target image location $j$ the dark field value based solely on measurements $M_j$ collected for the given target location $j$.

At a next step S345, the low and high resolution images $\Delta'$, $\Delta$ are received.

In step S350 low spatial frequency information is identified in the low resolution image $\Delta'$ and high spatial frequency information is identified in the high resolution image $\Delta$.

In step St 360 the low and high frequency image information from the two frequency ranges collected from the two images $\Delta$, $\Delta'$ is then combined.

The combination operation at step S360 may include a transverse Fourier transformation to transform back into image domain from the frequency domain where the spatial frequency analysis of step S360 was conducted. The combination operation may include adding the two images obtained in the inverse Fourier transformation or other frequency analysis such as the frequency splitting approach.

At step S370 the enhanced image obtained at the synthesizer or combination step S360 is then output.

At step S380 the enhanced imaged is then displayed, stored or otherwise processed.

Components of the bias reducer BR facility may be implemented as one or more software modules, run on one or more general-purpose processing units PU such as a workstation associated with the imager IA, or on a server computer associated with a group of imagers.

Alternatively, some or all components of the bias reducer BR may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the bias reducer BR may be implemented in both, partly in software and partly in hardware.

The different components of the bias reducer BR may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it, which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It is noted that embodiments of the invention are described with reference to different subject matters. In particular, some embodiments are described with reference to method type claims whereas other embodiments are described with reference to the device or system type claims. However, a person skilled in the art will gather from the above description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. System (IPS) for dark-field image processing, comprising:

   - one or more input interfaces (IN) for receiving, at a first resolution, a first dark-field image ($\Delta$') of an object (OB), and, at a second resolution higher than the first resolution, a second dark-field image ($\Delta$) of the object; and
   - a combiner ($\Sigma$) configured to combine first information from the first image and second information from the second image to obtain an enhanced dark-field image $\Delta^{\dagger}$.

2. System of claim 1, wherein the first information is at a first spatial frequency range and the second information is at a second spatial frequency range, wherein the first spatial frequency is lower than the second spatial frequency.

3. System of claim 1 or 2, including a dark-field image generator (IGEN) configured to generate, based on projection data ($\lambda$) including measurements (M) acquired by an X-ray imaging apparatus (IA) of the object (OB), the first dark-field image ($\Delta$') by computing, for a given target image location, an image value based on measurements for the said target image location and on one or more measurements for one or more other image locations in a neighborhood of the said target image location.

4. System of claim 1 or 2, including a dark-field image generator (IGEN) configured to generate, based on projection data ($\lambda$) including measurements ($M$) acquired by an imaging apparatus (IA) of the object (OB), the first dark-field image ($\Delta'$), and further including a low-pass filter (LPF) to low-pass filter the projection data before generation the first dark-field image ($\Delta'$) by the dark-field image generator (IGEN).

5. System of claims 3 or 4, wherein the dark-field image generator (IGEN) implements a phase retrieval algorithm.

6. System of claim 5, wherein the phase retrieval algorithm is based on a signal model that includes a fitting variable for a dark-field signal.

7. System of any one of the previous claims, wherein the imaging apparatus includes an imaging facilitator structure (IFS) that is configured to modulate X-ray radiation into a fringe pattern.

8. System of any one of the previous claims, wherein the imaging facilitator structure (IFS) includes a grating (G1, G2).

9. System of any one of the previous claims, wherein the imaging apparatus (IA) is of the scanning type.

10. A dark-field image processing method, comprising the steps of:

   - receiving (S345), at a first resolution, a first dark-field image ($\Delta'$) of an object (OB), and, at a second resolution higher than the first resolution, a second dark-field image ($\Delta$) of the object; and
   - combining (S360) first information from the first image and second information from the second image to obtain an enhanced dark-field image $\Delta^{\dagger}$.

11. A computer program element, which, when being executed by at least one processing unit (PU), is adapted to cause the processing unit (PU) to perform at least one of the steps of the method as per claim 10.

12. A computer readable medium having stored thereon the program element of claim 11.

**FIG. 1**

**FIG. 2**

FIG. 3

Europäisches
Patentamt

European
Patent Office

Office européen
des brevets

# EUROPEAN SEARCH REPORT

Application Number

EP 20 16 7474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONSTANTIN WILLER ET AL: "X-ray dark-field imaging of the human lung-A feasibility study on a deceased body", PLOS ONE, vol. 13, no. 9, 27 September 2018 (2018-09-27), page e0204565, XP055625547, DOI: 10.1371/journal.pone.0204565 * abstract; figures 1, 2 * * section "X-ray grating interferometry"; page 4 * * section "Results"; page 9, paragraph 3 * * section "Introduction"; page 2, paragraph 3 * * section "X-ray dark-field image contrast"; page 5, paragraph 3 * * section "CT Image acquisition, reconstruction and radiation dose"; page 7, paragraph 2 * * section "X-ray grating interferometry"; page 4, paragraph 3 * * section "Preparations"; page 6, paragraph 2 * ----- | 1-3,5-12 | INV. G06T5/50 |
| A | WO 2013/152509 A1 (USTC UNIV SCIENCE TECH CN [CN]; WU ZIYU [CN] ET AL.) 17 October 2013 (2013-10-17) * the whole document * ----- | 1-12 | |

TECHNICAL FIELDS SEARCHED (IPC)

G06T

-/--

The present search report has been drawn up for all claims

| Place of search | Date of completion of the search | Examiner |
|---|---|---|
| Munich | 28 August 2020 | Rodes Arnau, Isabel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 16 7474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAXIMILIAN VON TEUFFENBACH ET AL: "Grating-based phase-contrast and dark-field computed tomography: a single-shot method", SCIENTIFIC REPORTS, vol. 7, no. 1, 7 August 2017 (2017-08-07), XP055723793, DOI: 10.1038/s41598-017-06729-4 * the whole document * | 1-12 | |
| A | MARIE-LOUISE OLSSON ET AL: "An investigation of the iterative reconstruction method iDose 4 on a Philips CT Brilliance 64 using a Catphan 600 phantom", SPIE - INTERNATIONAL SOCIETY FOR OPTICAL ENGINEERING. PROCEEDINGS, vol. 8313, 23 February 2012 (2012-02-23), page 831348, XP055725963, US ISSN: 0277-786X, DOI: 10.1117/12.910889 ISBN: 978-1-5106-3549-4 * the whole document * | 1-12 | |

TECHNICAL FIELDS
SEARCHED        (IPC)

The present search report has been drawn up for all claims

| Place of search | Date of completion of the search | Examiner |
|---|---|---|
| Munich | 28 August 2020 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 7474

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2020

| Patent document cited in search report | Publication date | Patent family member(s) | Publication date |
|---|---|---|---|
| WO 2013152509 A1 | 17-10-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. YAROSHENKO et al.** Pulmonary Emphysema Diagnosis with a Preclinical Small-Animal X-ray Dark-Field Scatter-Contrast Scanner. *Radiology,* 02 November 2013, vol. 269

- **PFEIFFER et al.** Hard-X-ray dark-field imaging using a grating interferometer. *Nature Materials,* 2008, vol. 7, 134-137
- **SCHECHTER et al.** The frequency split method for helical cone-beam reconstruction. *Med. Phys.,* August 2004, vol. 31 (8